# EUROPÄISCHE PATENTSCHRIFT

(11) **EP 3 554 875 B1**
(45) Veröffentlichungstag und Bekanntmachung des Hinweises auf die Patenterteilung: **11.08.2021**
(21) Anmeldenummer: 17808843.1
(22) Anmeldetag: 27.11.2017
(51) Int. Cl.: B60K 15/05

(54) **SYSTEM, MIT EINER KLAPPE, EINEM AKTOR UND EINER STEUERUNG SOWIE VERFAHREN ZUR AUTOMATISCHEN BETÄTIGUNG EINER KLAPPE**
SYSTEM WITH A FLAP, AN ACTUATOR AND A CONTROLER AND METHOD FOR AUTOMATIC ACTUATION OF A FLAP
SYSTÈME AVEC UNE TRAPPE, UN ACTIONNEUR ET UNE COMMANDE ET PROCÉDÉ POUR L'ACTIONNEMENT AUTOMATIQUE D'UNE TRAPPE

(30) Priorität: 13.12.2016 DE 102016124155
(43) Veröffentlichungstag der Anmeldung: 23.10.2019
(73) Patentinhaber: HELLA GmbH & Co. KGaA, 59552 Lippstadt (DE)
(72) Erfinder: IRLE, Henning, 59557 Lippstadt (DE)
(86) Internationale Anmeldenummer: PCT/EP2017/080510
(87) Internationale Veröffentlichungsnummer: WO 2018/108505

(56) Entgegenhaltungen:
- DE-A1- 10 050 558
- DE-A1-102012 018 489
- DE-A1-102014 201 886
- DE-A1-102015 214 781

## Beschreibung

Die vorliegende Erfindung bezieht sich auf ein System, das eine Klappe für ein Kraftfahrzeug, insbesondere Tank- oder Ladeklappe, einen elektromotorischen Aktor, mit einem Abtrieb und einem Elektromotor, und eine elektrische Motorsteuerung aufweist, wobei der Elektromotor in Abhängigkeit eines elektrischen Betätigungssignals mittels der Motorsteuerung derart ansteuerbar ist, dass der Abtrieb des Aktors die Klappe in eine Öffnungslage oder Schließlage überführt. Ferner bezieht sich die Erfindung auf ein Verfahren zur automatischen Betätigung einer Klappe.

Derartige Systeme und Verfahren sind aus dem Stand der Technik in zahlreichen Ausführungsvarianten bereits bekannt.

Beispielsweise ist aus der DE 103 34 719 A1 eine Einrichtung bekannt, bei der ein Motorantrieb zur Überführung einer Tankklappe in deren Öffnungs- oder Schließlage aufgrund eines Einschaltbefehls oder eines Signals einer Person oder einer Einfülleinrichtung betätigt wird. Mittels Hall-Sensoren wird die Öffnungslage und die Schließlage der Tankklappe detektiert, um den Motorantrieb jeweils selbsttätig abzuschalten. Anstelle der Hall-Sensoren kann gemäß der DE 103 34 719 A1 das Erreichen der Öffnungs- oder Schließlage auch durch die Auswertung der Strom- und/oder Spannungscharakteristik des Motorantriebs detektiert werden.

Ferner ist aus der DE 10 2012 018 489 A1 eine Klappenanordnung für ein Kraftfahrzeug, mit einer, insbesondere vorgespannt, beweglich gelagerten Klappe, insbesondere einer Tankklappe, einem Haltemittel zum Festlegen der Klappe, einem Aktor zum Betätigen des Haltemittels und einem Betätigungsmittel zum Betätigen des Aktors bekannt, wobei der Aktor dazu eingerichtet ist, das Haltemittel zum Festlegen und zum Freigeben der Klappe zu betätigen.

Hier setzt die vorliegende Erfindung an.

Der vorliegenden Erfindung liegt die Aufgabe zugrunde, ein automatisches Öffnen oder Schließen einer Klappe für ein Kraftfahrzeug mit einfachen schaltungstechnischen Mitteln zu realisieren.

Diese Aufgabe wird durch ein System mit den Merkmalen des Anspruchs 1 und ein Verfahren mit den Merkmalen des Anspruchs 6 gelöst. Die Unteransprüche betreffen vorteilhafte Weiterbildungen der Erfindung.

Ein wesentlicher Vorteil der Erfindung liegt insbesondere darin, dass keine Sensoren, wie beispielsweise Taster, Annäherungsschalter oder dergleichen, oder Fernbedienungen erforderlich sind, um ein Betätigungssignal für einen elektromotorischen Aktor einer Klappe für ein Kraftfahrzeug zu erzeugen. Dies ermöglicht die Verwendung einer einfachen elektrischen Schaltung zur Ansteuerung eines Elektromotors des elektromotorischen Antriebs mittels einer Motorsteuerung. Aufgrund der Ausbildung des Betätigungssignals als eine elektrische Spannung, die in Abhängigkeit der Fremdbewegung des Abtriebs mittels des Elektromotors induzierbar ist, ist der Aufbau des Systems vereinfacht. Darüber hinaus werden Bauteile, Verkabelung und Bauraum eingespart, wodurch ein kompakter und kostengünstiger Aufbau des erfindungsgemäßen Systems mit geringem Gewicht erzielbar ist.

Grundsätzlich ist die Fremdbewegung des Abtriebs des Aktors nach Art, Krafteinleitung, Kraftamplitude, Wirkrichtung und Zeitdauer in weiten geeigneten Grenzen frei wählbar. Zweckmäßigerweise ist vorgesehen, dass das Betätigungssignal mittels einer Fremdbewegung des Abtriebs entgegen einer damit ausgelösten Stellbewegung des Abtriebs erzeugbar ist. Beispielsweise würde demnach eine Überführung der Klappe in eine Öffnungslage eine Fremdbewegung des Abtriebs in Richtung einer Schließlage der Klappe als Betätigungssignal erfordern und umgekehrt. Handelt es sich bei dem Abtrieb beispielsweise um eine Welle mit einem Stirnradgetriebe oder dergleichen, so müsste das Stirnradgetriebe und damit die Welle also durch die Fremdbewegung entgegengesetzt zu der Drehrichtung gedreht werden, die zu einer Öffnung der Klappe korrespondiert und umgekehrt.

Eine besonders vorteilhafte Weiterbildung des erfindungsgemäßen Systems sieht vor, dass die Fremdbewegung des Abtriebs durch eine Krafteinwirkung auf die Klappe erzeugbar ist. Auf diese Weise ist eine zusätzliche Handhabe oder dergleichen und eine dazu korrespondierende Kopplungskonstruktion zwischen der Handhabe und dem Abtrieb des Aktors entbehrlich.

Eine weitere vorteilhafte Weiterbildung des erfindungsgemäßen Systems sieht vor, dass der Elektromotor des Aktors mittels mindestens einer elektrischen Versorgungsleitung an die Motorsteuerung und mittels dieser mindestens einen elektrischen Versorgungsleitung an eine Auswerteschaltung angeschlossen ist und das Betätigungssignal mittels dieser mindestens einen Versorgungsleitung an die Auswerteschaltung übertragbar ist. Auf diese Weise ist der Aufbau des erfindungsgemäßen Systems zusätzlich vereinfacht.

Gleiches gilt für eine vorteilhafte Weiterbildung des erfindungsgemäßen Verfahrens, die vorsieht, dass der Elektromotor des Aktors mittels mindestens einer elektrischen Versorgungsleitung an die Motorsteuerung und mittels dieser mindestens einen elektrischen Versorgungsleitung an eine Auswerteschaltung angeschlossen ist und das Betätigungssignal mittels dieser mindestens einen Versorgungsleitung an die Auswerteschaltung übertragen wird.

In einer vorteilhaften Fortbildung der letztgenannten Ausführungsform des erfindungsgemäßen Systems ist vorgesehen, dass die Motorsteuerung und die Auswerteschaltung in einer Baueinheit baulich zusammengefasst sind. Auf diese Weise ist ein höherer Integrationsgrad und damit eine weitere Platz- und Kosteneinsparung ermöglicht.

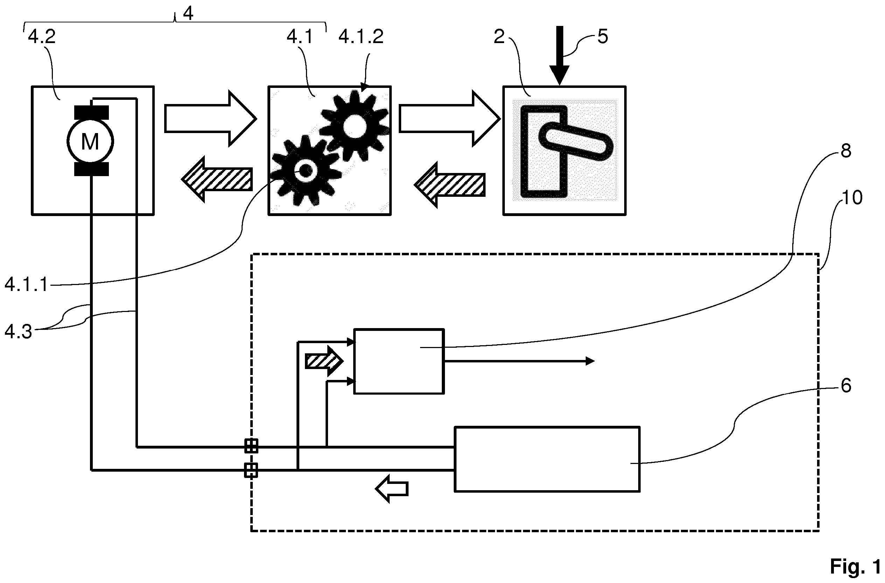

Anhand der beigefügten Zeichnung wird die Erfindung nachfolgend näher erläutert. Dabei zeigt die einzige
- Fig. 1: ein Ausführungsbeispiel des erfindungsgemäßen Systems in einer grob schematischen Darstellung.

In der einzigen Fig. 1 ist ein Ausführungsbeispiel des erfindungsgemäßen Systems gezeigt. Das System weist eine als Tankklappe eines nicht näher dargestellten Kraftfahrzeugs ausgebildete Klappe 2 auf, die mittels eines elektromotorischen Aktors 4 von einer Schließlage in eine Öffnungslage und von der Öffnungslage in die Schließlage überführbar ist. In der Schließlage ist eine Einfüllöffnung eines Kraftfahrzeugtanks durch die Tankklappe 2 auf dem Fachmann bekannte Weise abgedeckt. In der Öffnungslage ist die Einfüllöffnung des Kraftfahrzeugtanks von außen zugänglich, so dass eine Zapfpistole einer Kraftstoffzapfanlage in die Einfüllöffnung des Kraftfahrzeugtanks eingeführt werden kann. Die Öffnungs- und Schließlage der Tankklappe 2, wie auch die Einfüllöffnung des Kraftfahrzeugtanks und der Kraftfahrzeugtank sind nicht dargestellt.

Der elektromotorische Aktor 4 weist für die Betätigung der Tankklappe 2, also für deren Überführung in die Öffnungs- oder Schließlage, einen Abtrieb 4.1 auf, der zusätzlich zu einer durch einen Elektromotor 4.2 des Aktors 4 antreibbaren Welle 4.1.1 ein als Stirnradgetriebe ausgebildetes Getriebe 4.1.2 umfasst.

Der Elektromotor 4.2 des Aktors 4 ist mittels zweier elektrischer Versorgungsleitungen 4.3 mit einer Motorsteuerung 6 elektrisch leitend verbunden. Die zwei Versorgungsleitungen 4.3 sind in dem vorliegenden Ausführungsbeispiel zusätzlich mit einer Auswerteschaltung 8 elektrisch leitend, nämlich signalübertragend, verbunden. Zur Erzeugung eines Betätigungssignals ist die Auswerteschaltung 8 ferner mit der Motorsteuerung 6 in Signalübertragungsverbindung. Die Motoransteuerung 6 und die Auswerteschaltung 8 sind hier in einer Baueinheit 10 baulich zusammengefasst.

Nachfolgend wird der Betrieb des erfindungsgemäßen Systems sowie das erfindungsgemäße Verfahren gemäß dem vorliegenden Ausführungsbeispiel anhand der Fig. 1 näher erläutert. Die Signalkette ist in der Fig. 1 mit schraffierten Pfeilen und die Stellkette ist in der Fig. 1 mit Pfeilen ohne Schraffur symbolisiert.

Es sei zunächst unterstellt, dass sich die Tankklappe 2 in deren Schließlage befindet und der Elektromotor 4.2 des Aktors 4 nicht bestromt ist. Zur Betankung des Kraftfahrzeugs an einer Zapfsäule einer Tankstelle drückt der Fahrzeugführer oder eine andere Person von außen auf die zu öffnende Tankklappe 2, analog zu den Push-Push-Öffnungsmechaniken von aus dem Stand der Technik bekannten Tankklappen. Diese Krafteinwirkung auf die Tankklappe 2, in der Fig. 1 durch einen Pfeil 5 symbolisiert, wird mittels des Stirnradgetriebes 4.1.2 und der Welle 4.1.1 des Abtriebs 4.1 mittelbar auf den nicht dargestellten Rotor des Elektromotors 4.2 übertragen.

Der Druck 5 auf die Tankklappe 2 führt somit zu einer Drehbewegung der Welle 4.1.1, die wiederum zu einer Drehbewegung des Rotors des Elektromotors 4.2 führt. Da die Druckrichtung 5 entgegengesetzt zu der Bewegung der Tankklappe 2 bei der Überführung in deren Öffnungslage verläuft, verläuft hier die Fremdbewegung des Abtriebs 4.1, also des Stirnradgetriebes 4.1.2 und der Welle 4.1.1, sowie des Rotors des Elektromotors 4.2 entsprechend auch entgegengesetzt zu der damit ausgelösten Stellbewegung des Abtriebs 4.1, nämlich der Überführung der Tankklappe 2 in deren Öffnungslage.

Durch die Drehung des Rotors des Elektromotors 4.2 durch die Fremdbewegung des Abtriebs 4.1 wirkt der Elektromotor 4.2 als Generator. Die dadurch in den elektrischen Versorgungsleitungen 4.3 induzierte Spannung liegt aufgrund der signalübertragenden Verbindung der elektrischen Versorgungsleitungen 4.3 mit der Auswerteschaltung 8 auch am Signaleingang der Auswerteschaltung 8 an. Dieses Eingangssignal wird in der Auswerteschaltung 8 auf dem Fachmann bekannte Weise aufbereitet und weiterverarbeitet und führt zu einer Ansteuerung des Aktors 4 durch die Motorsteuerung 6, derart, dass der Aktor 4 mittels des Abtriebs 4.1 die Tankklappe 2 automatisch in deren Öffnungslage überführt. Das an der Auswerteschaltung 8 anliegende Eingangssignal ist somit als eine elektrische Spannung ausgebildet, die in Abhängigkeit der Fremdbewegung des Abtriebs 4.1 mittels des Elektromotors 4.2 induziert wird.

Das auf die oben genannte Weise erzeugte Eingangssignal ist somit ein elektrisches Betätigungssignal zur Ansteuerung des elektromotorischen Aktors 4 durch die Motorsteuerung 6, um die Tankklappe 2 mittels des Abtriebs 4.1 des Aktors 4 von deren Schließlage in deren Öffnungslage zu überführen. In der Öffnungslage steht die Tancklappe 2 etwa im 90° Winkel von der Fahrzeugkarosserie ab, so dass die Zapfpistole in die Einfüllöffnung des Kraftstofftanks eingeführt werden kann.

Soll die Tankklappe 2 nach dem Tanken von deren Öffnungslage wieder in die Schließlage überführt werden, drückt der Fahrzeugführer oder eine andere Person wiederum gegen die Tankklappe 2. Der Druck auf die Tankklappe 2 erfolgt hierbei jedoch von Innen auf die Tankklappe 2, also auf deren nicht dargestellte Innenseite. Entsprechend erfolgt die Fremdbewegung des Abtriebs 4.1 auch zur Auslösung des Betätigungssignals für eine Stellbewegung des Abtriebs 4.1 für eine Überführung der Tankklappe 2 von deren Öffnungslage in deren Schließlage entgegengesetzt zu der Stellbewegung des Abtriebs 4.1.

Das Stirnradgetriebe 4.1.2 und die Welle 4.1.1 des Abtriebs 4.1 sowie der Rotor des Elektromotors 4.2 werden dadurch nun im Vergleich zu der Fremdbewegung des Abtriebs 4.1 zur Überführung der Tankklappe 2 in deren Öffnungslage in die entgegengesetzte Richtung gedreht. Der Elektromotor 4.2 wirkt erneut als Generator und an den beiden Versorgungsleitungen 4.3 sowie an der damit signalübertragend verbundenen Auswerteschaltung 8 liegt wieder eine elektrische Spannung als Eingangssignal an. Jedoch weist diese elektrische Spannung im Vergleich zu der bereits erläuterten Fremdbewegung des Abtriebs 4.1 und damit des Rotors des Elektromotors 4.2 ein entgegengesetztes Vorzeichen auf, was zu einer anderen Ansteuerung des Aktors 4 durch die Motorsteuerung 6 führt. Nämlich zu einer zur Überführung der Tankklappe 2 von der Öffnungslage in die Schließlage korrespondierenden Stellbewegung des Aktors 4. Das an der Auswerteschaltung 8 jetzt anliegende Eingangssignal ist somit wiederum als eine elektrische Spannung ausgebildet, die in Abhängigkeit der Fremdbewegung des Abtriebs 4.1 mittels des Elektromotors 4.2 induziert wird.

Das auf die vorgenannte Weise erzeugte Eingangssignal ist somit ein elektrisches Betätigungssignal zur Ansteuerung des elektromotorischen Aktors 4 durch die Motorsteuerung 6, um die Tankklappe 2 mittels des Abtriebs 4.1 des Aktors 4 von deren Öffnungslage in deren Schließlage zu überführen.

Die Erfindung ist nicht auf das vorliegende Ausführungsbeispiel begrenzt. Beispielsweise ist es nicht erforderlich, dass der Abtrieb des elektromotorischen Aktors ein Getriebe, insbesondere ein Stirnradgetriebe, aufweist. Auch kann jede andere geeignete Art der Fremdbewegung des Abtriebs, auch in Richtung der mittels des Betätigungssignals ausgelösten Stellbewegung des Abtriebs, verwendet werden.

Gleiches gilt für die Art des Elektromotors des elektromotorischen Aktors. Der Fachmann wird, je nach Anwendungsfall, die geeigneten Mittel auswählen.

Bei der Klappe kann es sich auch um eine Ladeklappe, beispielsweise für ein Elektrofahrzeug oder ein Hybridfahrzeug, handeln. Jedoch sind auch andere Klappen für ein Kraftfahrzeug grundsätzlich denkbar. Dabei ist der Begriff "Klappe" weit auszulegen und meint jede Art von Deckel, Abdeckung oder dergleichen.

Die Versorgung des Elektromotors des elektromotorischen Aktors ist in dem Ausführungsbeispiel als eine elektrische Zweidraht-Versorgungsleitung, also als zwei elektrische Versorgungsleitungen, ausgebildet. Es ist jedoch auch möglich, lediglich eine Eindraht-Versorgungsleitung zu verwenden und einen der elektrischen Anschlüsse des Elektromotors mit Masse zu verbinden. Sollte ein bürstenloser Elektromotor verwendet werden, so sind auch mehrpolige Versorgungsleitungen, insbesondere drei Versorgungsleitungen, möglich.

Die Erfindung verbindet somit die Vorteile einer bei Fahrzeugführern und anderen Bedienpersonen bekannten und bewährten Bedienung einer Klappe, insbesondere einer Tank- oder Ladeklappe, nämlich die Push-Push-Bedienung, mit einer vereinfachten elektrischen Schaltung bei einer Realisierung unter Verwendung eines elektromotorischen Aktors zur Überführung der Klappe in deren Öffnungs- und/oder Schließlage.

### Bezugszeichenliste

- 2: Klappe, als Tankklappe ausgebildet
- 4: Elektromotorischer Aktor
- 4.1: Abtrieb des elektromotorischen Aktors 4
- 4.1.1: Welle des Abtriebs 4.1
- 4.1.2: Getriebe des Abtriebs 4.1, als Stirnradgetriebe ausgebildet
- 4.2: Elektromotor des elektromotorischen Aktors 4
- 4.3: Elektrische Versorgungsleitungen für den Elektromotor 4.2
- 5: Krafteinwirkung auf die Klappe 2
- 6: Motorsteuerung
- 8: Auswerteschaltung
- 10: Baueinheit

## Patentansprüche

1. System, das eine Klappe (2) für ein Kraftfahrzeug, insbesondere Tank- oder Ladeklappe, einen elektromotorischen Aktor (4), mit einem Abtrieb (4.1) und einem Elektromotor (4.2), und eine elektrische Motorsteuerung (6) aufweist, wobei der Elektromotor (4.2) in Abhängigkeit eines elektrischen Betätigungssignals mittels der Motorsteuerung (6) derart ansteuerbar ist, dass der Abtrieb (4.1) des Aktors (4) die Klappe (2) in eine Öffnungslage oder Schließlage überführt, und wobei das Betätigungssignal mittels einer Fremdbewegung des Abtriebs (4.1) erzeugbar ist,
**dadurch gekennzeichnet,**
**dass** das Betätigungssignal als eine elektrische Spannung ausgebildet ist, die in Abhängigkeit der Fremdbewegung des Abtriebs (4.1) mittels des Elektromotors (4.2) induzierbar ist.

2. System nach Anspruch 1,
**dadurch gekennzeichnet,**
**dass** das Betätigungssignal mittels einer Fremdbewegung des Abtriebs (4.1) entgegen einer damit ausgelösten Stellbewegung des Abtriebs (4.1) erzeugbar ist.

3. System nach Anspruch 1 oder 2,
**dadurch gekennzeichnet,**
**dass** die Fremdbewegung des Abtriebs (4.1) durch eine Krafteinwirkung (5) auf die Klappe (2) erzeugbar ist.

4. System nach einem der Ansprüche 1 bis 3,
**dadurch gekennzeichnet,**
**dass** der Elektromotor (4.2) des Aktors (4) mittels mindestens einer elektrischen Versorgungsleitung (4.3) an die Motorsteuerung (6) und mittels dieser mindestens einen elektrischen Versorgungsleitung (4.3) an eine Auswerteschaltung (8) angeschlossen ist und das Betätigungssignal mittels dieser mindestens einen Versorgungsleitung (4.3) an die Auswerteschaltung (8) übertragbar ist.

5. System nach Anspruch 4,
**dadurch gekennzeichnet,**
**dass** die Motorsteuerung (6) und die Auswerteschaltung (8) in einer Baueinheit (10) baulich zusammengefasst sind.

6. Verfahren zur automatischen Betätigung einer Klappe (2) eines Systems für ein Kraftfahrzeug, insbesondere Tank- oder Ladeklappe, wobei das System einen elektromotorischen Aktor (4), mit einem Abtrieb (4.1) und einem Elektromotor (4.2), und eine elektrische Motorsteuerung (6) aufweist, und wobei der Elektromotor (4.2) in Abhängigkeit eines elektrischen Betätigungssignals mittels der Motorsteuerung (6) derart angesteuert wird, dass der Abtrieb (4.1) des Aktors (4) die Klappe (2) automatisch in eine Öffnungslage oder Schließlage überführt, und wobei das Betätigungssignal mittels einer Fremdbewegung des Abtriebs (4.1) erzeugt wird,
**dadurch gekennzeichnet,**
**dass** das Betätigungssignal als eine elektrische Spannung ausgebildet ist, die in Abhängigkeit der Fremdbewegung des Abtriebs (4.1) mittels des Elektromotors (4.2) induziert wird.

7. Verfahren nach Anspruch 6,
**dadurch gekennzeichnet,**
**dass** der Elektromotor (4.2) des Aktors (4) mittels mindestens einer elektrischen Versorgungsleitung (4.3) an die Motorsteuerung (6) und mittels dieser mindestens einen elektrischen Versorgungsleitung (4.3) an eine Auswerteschaltung (8) angeschlossen ist und das Betätigungssignal mittels dieser mindestens einen Versorgungsleitung (4.3) an die Auswerteschaltung (8) übertragen wird.

## Claims

1. System that has a flap (2) for a motor vehicle, in particular a fuel filler flap or a charging flap, an electromotive actuator (4), having an output drive (4.1) and an electric motor (4.2), and an electrical motor controller (6), wherein the electric motor (4.2) can be driven by means of the motor controller (6) on the basis of an electrical actuation signal in such a way that the output drive (4.1) of the actuator (4) transfers the flap (2) into an open position or closed position, and wherein the actuation signal can be produced by means of an external movement of the output drive (4.1),
**characterized in that**
the actuation signal is in the form of a voltage that can be induced by means of the electric motor (4.2) on the basis of the external movement of the output drive (4.1).

2. System according to claim 1,
**characterized in that**
the actuation signal can be produced by means of an external movement of the output drive (4.1) counter to an actuating movement of the output drive (4.1) triggered thereby.

3. System according to claim 1 or 2,
**characterized in that**
the external movement of the output drive (4.1) can be produced by an action of force (5) on the flap (2).

4. System according to one of claims 1 to 3,
**characterized in that**
the electric motor (4.2) of the actuator (4) is connected to the motor controller (6) by means of at least one electrical supply line (4.3) and to an evaluation circuit (8) by means of this at least one electrical supply line (4.3), and the actuation signal can be transmitted to the evaluation circuit (8) by means of this at least one supply line (4.3).

5. System according to claim 4,
**characterized in that**
the motor controller (6) and the evaluation circuit (8) are physically combined in a physical unit (10).

6. Method for automatically actuating a flap (2) of a system for a motor vehicle, in particular a fuel filler flap or a charging flap, wherein the system has an electromotive actuator (4), having an output drive (4.1) and an electric motor (4.2), and an electrical motor controller (6), and wherein the electric motor (4.2) is driven by means of the motor controller (6) on the basis of an electrical actuation signal in such a way that the output drive (4.1) of the actuator (4) automatically transfers the flap (2) into an open position or closed position, and wherein the actuation signal is produced by means of an external movement of the output drive (4.1),
**characterized in that**
the actuation signal is in the form of a voltage that is induced by means of the electric motor (4.2) on the basis of the external movement of the output drive (4.1).

7. Method according to Claim 6,
**characterized in that**
the electric motor (4.2) of the actuator (4) is connected to the motor controller (6) by means of at least one electrical supply line (4.3) and to an evaluation circuit (8) by means of this at least one electrical supply line (4.3), and the actuation signal is transmitted to the evaluation circuit (8) by means of this at least one supply line (4.3).

## Revendications

1. Système qui présente une trappe (2) pour un véhicule automobile, en particulier une trappe de réservoir de carburant ou de chargement, un actionneur électromoteur (4) doté d'un entraînement de sortie (4.1) et d'un moteur électrique (4.2), et une commande moteur électrique (6), le moteur électrique (4.2) pouvant être piloté au moyen de la commande moteur (6) en fonction d'un signal d'actionnement électrique de telle sorte que l'entraînement de sortie (4.1) de l'actionneur (4) fait passer la trappe (2) dans une position d'ouverture ou une position de fermeture, et le signal d'actionnement pouvant être généré au moyen d'un mouvement extérieur de l'entraînement de sortie (4.1),
**caractérisé en ce que** le signal d'actionnement est réalisé sous la forme d'une tension électrique qui peut être induite au moyen du moteur électrique (4.2) en fonction du mouvement extérieur de l'entraînement de sortie (4.1).

2. Système selon la revendication 1, **caractérisé en ce que** le signal d'actionnement peut être généré au moyen d'un mouvement extérieur de l'entraînement de sortie (4.1) contre un mouvement de réglage de l'entraînement de sortie (4.1) déclenché par celui-ci.

3. Système selon la revendication 1 ou 2, **caractérisé en ce que** le mouvement extérieur de l'entraînement de sortie (4.1) peut être généré par l'action d'une force (5) sur la trappe (2).

4. Système selon l'une quelconque des revendications 1 à 3, **caractérisé en ce que** le moteur électrique (4.2) de l'actionneur (4) est raccordé à la commande moteur (6) au moyen d'au moins une ligne d'alimentation électrique (4.3) et est raccordé à un circuit d'évaluation (8) au moyen de cette au moins une ligne d'alimentation électrique (4.3), et le signal d'actionnement peut être transmis au circuit d'évaluation (8) au moyen de cette au moins une ligne d'alimentation (4.3).

5. Système selon la revendication 4, **caractérisé en ce que** la commande moteur (6) et le circuit d'évaluation (8) sont regroupés par construction en un module (10).

6. Procédé d'actionnement automatique d'une trappe (2) d'un système pour un véhicule automobile, en particulier une trappe de réservoir de carburant ou de chargement, le système présentant un actionneur électromoteur (4) doté d'un entraînement de sortie (4.1) et d'un moteur électrique (4.2), et une commande moteur électrique (6), le moteur électrique (4.2) pouvant être piloté au moyen de la commande moteur (6) en fonction d'un signal d'actionnement électrique de telle sorte que l'entraînement de sortie (4.1) de l'actionneur (4) fait passer la trappe (2) automatiquement dans une position d'ouverture ou une position de fermeture, et le signal d'actionnement est généré au moyen d'un mouvement extérieur de l'entraînement de sortie (4.1),
**caractérisé en ce que** le signal d'actionnement est réalisé sous la forme d'une tension électrique qui est induite au moyen du moteur électrique (4.2) en fonction du mouvement extérieur de l'entraînement de sortie (4.1).

7. Procédé selon la revendication 6, **caractérisé en ce que** le moteur électrique (4.2) de l'actionneur (4) est raccordé à la commande moteur (6) au moyen d'au moins une ligne d'alimentation électrique (4.3) et est raccordé à un circuit d'évaluation (8) au moyen de cette au moins une ligne d'alimentation électrique (4.3), et le signal d'actionnement est transmis au circuit d'évaluation (8) au moyen de cette au moins une ligne d'alimentation (4.3).
